# EUROPEAN PATENT APPLICATION

(11) **EP 4 564 249 A1**
(43) Date of publication of application: **04.06.2025**
(21) Application number: 24211713.3
(22) Date of filing: 08.11.2024
(51) Int. Cl.: G06Q 10/04, G06F 17/11, G06N 5/01, G06Q 10/06, G06Q 10/0631, G06Q 30/0202

(54) **SCHEDULING ASSIGNMENT OPTIMIZER**

(30) Priority: 30.11.2023 US 202318525420
(71) Applicant: NCR Voyix Corporation, Atlanta, GA 30308-1007 (US)
(72) Inventor: BJELCEVIC, Stefan, Roswell, GA (US); LOSCOCCO, Karen Anne, Atlanta, GA (US); MCDANIEL, Christian, Atlanta, GA (US)
(74) Representative: Secerna LLP

(57) **Abstract**

A forecast for a future period of time is translated into resource requirements for each interval of time of each day provided in the future interval of time. Resource constraints and resource objectives of an enterprise are converted into mathematical values and statements and provided as input features to a constraint optimization model along with the resource requirements, the interval of time, and the future period of time. The model outputs a data structure representing an optimized resource-assigned schedule for each interval of each day over the future period of time. The data structure is translated into a format that represents a resource assigned schedule. The resource assigned schedule is rendered though an enterprise to a user. In an embodiment, the resource assigned schedule is translated into an additional format and uploaded to a scheduling system of the enterprise using an application programming interface.

## Description

### Background

There are many things to consider when creating an employee schedule. Generally, given a limited number of employees with specific roles that need to cover a range of time every day of the week, there can be hundreds if not thousands of feasible combinations to create a schedule. Currently, employee scheduling is a manual process that consumes a lot of management time and is fraught with errors.

### Summary

According to a first aspect of the present invention there is provided a method, comprising:
obtaining a forecast for a future period of time associated with an enterprise, the future period of time comprising one or more intervals of time;
obtaining constraints and objectives for resources of the enterprise;
calculating resource and role requirements for each interval of time in the future period of time based on the forecast;
translating the constraints and the objectives into mathematical values;
providing each interval of time, the future period of time, the resource and role requirements and the mathematical values as input features to a constraint optimization model (model);
receiving a data structure from the model, the data structure representing an optimized resource assigned schedule for each interval of time in the future period of time;
translating the data structure into a format for a resource assigned schedule; and
providing the resource assigned schedule to an interface or a scheduling system associated with the enterprise.

Aptly, the method, wherein obtaining the forecast further includes obtaining the forecast as a sales forecast from a forecasting data store of the enterprise.

Aptly, the method, wherein obtaining the constraints and the objectives further includes obtaining a first portion of the constraints and the objectives from a resource data store of the enterprise.

Aptly, the method, wherein obtaining the constraints and the objectives further includes obtaining a second portion of the constraints and the objectives through the interface or from the scheduling system.

Aptly, the method, wherein calculating further includes mapping each predicted sales for each interval of time to generic resources, each of which includes a specific role.

Aptly, the method, wherein translating further includes assigning the constraints and the objectives to the mathematical values based on predefined criteria and value ranges

Aptly, the method, wherein translating further includes assigning certain mathematical values for the objectives to indicate whether a given objective is to be maximized or minimized by the model.

Aptly, the method, wherein providing the resource assigned schedule further includes providing the resource assigned schedule to the interface in the format and to the scheduling system in a second format.

Aptly, the method, wherein providing the resource assigned schedule further includes uploaded the resource assigned schedule in the second format to the scheduling system using an application programming interface.

Aptly, the method further comprising, iterate to obtaining the forecast each time a new forecast is available from a forecasting data store.

According to a second aspect of the present invention there is provided a method, comprising:
receiving a sales forecast for each interval of time over a future period of time;
determining employee requirements by roles for each interval of time in the sales forecast based on the sales forecast;
obtaining constraints, employee objectives, and enterprise objectives;
normalizing the constraints, the employee objectives, and the enterprise objectives into input features;
providing the input features, the employee requirements by the roles, each interval of time, and the future period of time as input to a constraint optimization model (model);
receiving an optimized employee assigned schedule for each interval of time over the future period of time from the model, wherein the constraints and employee requirements are satisfied in the optimized employee assigned schedule, and each of the employee objectives and enterprise objectives are either maximized or minimized in the optimized employee assigned schedule; and
providing the optimized employee assigned schedule to one or more of an enterprise system or an enterprise interface.

Aptly, the method, wherein determining the employee requirements by the roles further include assigning a total number of employee units with each employee unit assigned a given role per interval of time.

Aptly, the method, wherein normalizing further includes representing the constraints as mandatory criteria, the employee objectives as first desired criteria, and the enterprise objectives as second desired criteria.

Aptly, the method, wherein receiving further includes verifying the optimized employee assigned schedule complies with employee labor laws and regulations.

Aptly, the method, wherein verifying further includes iterating to the normalizing and making one or more of the employee objectives or the enterprise objectives associated with noncompliance of the employee labor laws and regulations a mandatory constraint until a version of the optimized employee assigned schedule provided by the model is in compliance with the employee labor laws and regulations.

Aptly, the method, wherein providing the schedule further includes converting a first format of the optimized employee assigned schedule provided as output from the model to a second format associated with the enterprise interface.

Aptly, the method, wherein providing the schedule further includes converting the first format of the optimized employee assigned schedule provided as output from the model to a third format associated with the enterprise system.

Aptly, the method further comprising, iterating to the receiving the sales forecast based on a request received from the enterprise interface.

According to a third aspect of the present invention there is provided a system, comprising:
at least one server comprising a processor and a non-transitory computer-readable storage medium;
the non-transitory computer-readable storage medium comprising executable instructions; and
the executable instructions when executed by the processor cause the processor to perform operations comprising:
   calculating employee requirements by roles for each interval of time in a future period of time based on a sales forecast for the future period of time;
   normalizing constraints and objectives into input features;
   providing the employee requirements by the roles, each interval of time, the future period of time, the constraints, and the objectives as input to a constraint optimization model (model);
   receiving an optimized employee assigned schedule for each interval of time over the future period of time as output from the model;
   translating the optimized employee assigned schedule from a first format to at least one second format; and
   providing the optimized employee assigned schedule in the at least one format to one or more of an enterprise interface and an enterprise scheduling system.

Aptly, the system, the executable instructions associated with providing the optimized employee assigned schedule further includes providing the optimized employee assigned schedule in a first format to the enterprise interface and updating the optimized employee assigned schedule in a second format to the enterprise scheduling system using an application programming interface.

### Brief Description of the Drawings

FIG. 1A is a diagram of a system for determining and providing an optimal resource assigned schedule, according to an example embodiment.
FIG. 1B is a diagram of example input data and optimized schedules produced by the system of FIG. 1A based on the input data, according to an example embodiment.
FIG. 1C is a diagram illustrating interaction between components of the system of FIG. 1A, according to an example embodiment.
FIG. 2 is a flow diagram of a method for determining and providing an optimal resource assigned schedule, according to an example embodiment.
FIG. 3 is a flow diagram of another method for determining and providing an optimal resource assigned schedule, according to an example embodiment.

### Detailed Description

Managers of restaurants spend an average of 2 to 3 hours a week creating employee schedules for the upcoming week(s). This requires consideration of labor laws, employee time off, costs per employee, employee tenure, busy times, etc.

Managers have to consider a wide range of constraints when producing employee schedules. Example constraints include staffing requirements, which must be satisfied by the sum of available employees and slack (extra workers needed); minimum and maximum shift lengths for employees; minimum break length for employee breaks; restriction on the number of role(s) an employee can in for the same day and time as scheduled; restrictions on the number of role(s) an employee can work in per day/week, which can be modified dependent on requirements; restrictions on the number of times a day an employee can be asked to change roles a day, which can be configurable; constraints relating to when and how employees are paid overtime (e.g., per day or per week, 8-hour limit per day, 40-hour limit per week, etc.), which is configurable; maximum total assigned hours per day and per week for an employee, including overtime assignments; restrictions on whether an employee can be given both regular and overtime assignments for the same time; requirement for employee regular assignments to come before daily overtime assignments per day; requirement for employee daily overtime assignments to come before weekly overtime assignments per week; requirement that daily overtime assignments per day can occur only after a certain amount of regular assignments, typically 8 hours; requirement that weekly overtime assignments per week can occur only after a certain amount of regular assignments and daily overtime assignments, typically 40 hours of regular time plus daily overtime; and so forth. These constraints are meant to illustrate the types of rules that managers must consider when generating feasible employee work schedules in order to find a "best" schedule in terms of defined objectives.

The techniques provided herein and below provide a mathematical constraint optimization model (hereinafter just "model") that defines a set of constraints, which a feasible schedule has to adhere to, and finds an "optimal" or "best" schedule in terms of defined objectives. Inputs to the model are tenant/site specific employee and operational information. The data inputs are sourced from existing data stores of an enterprise. The data inputs are translated into mathematical formulas which in turn represent the constraints as Boolean and/or integer values that are processed by constraint optimization algorithms of the model.

The model outputs an "optimized" employee assigned work schedule according to defined objectives. The defined objectives include minimizing gaps in work coverage, minimizing total costs, maximizing the number of worker defined preferences, minimizing the total number of starts per employee per day, and balancing the work distributed to workers on both a daily and weekly level, and other enterprise-specific objectives. Furthermore, the objectives are either employee objectives based on employee desires or enterprise objectives based on enterprise desires. The objectives are goals that the model tries to either maximize or minimize while also not breaking any constraints. Some additional constraints can include maximum daily limit a worker can work, maximum weekly limit a worker can work, the minimum shift length, etc. Essentially, the constraints are defined either by employee laws or regulations or rules put in place by a tenant (e.g., an enterprise, a store, a restaurant, etc.) based on the tenant's operating procedures.

The combination of constraints that must not be violated and objectives that are maximized or minimized permits the model to generate schedules that meet all the necessary criteria. That is, the objectives help the model to reduce the number of feasible options for purposes of selecting an "optimal schedule." An "optimal schedule," as used herein, is a schedule that does not violate any of the constraints and satisfies the largest number of the objectives when compared against other candidate schedules, which also do not violate any of the constraints.

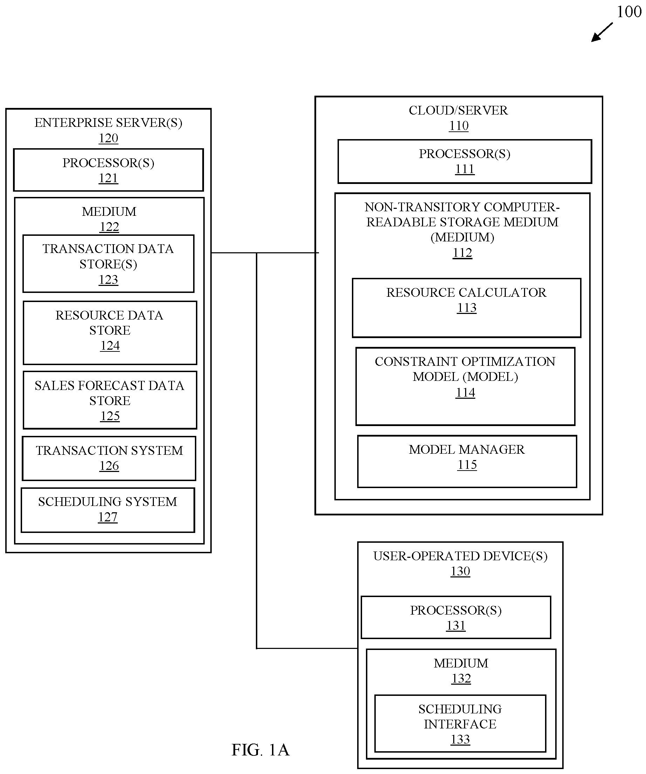

FIG. 1A is a diagram of a system 100 for determining and providing an optimal resource assigned schedule, according to an example embodiment, according to an example embodiment. Notably, the components are shown schematically in greatly simplified form, with just those components relevant to understanding of the embodiments being illustrated.

Furthermore, the various components (that are identified in system 100) are illustrated and the arrangement of the components are presented for purposes of illustration only. It is to be noted that other arrangements with more or less components are possible without departing from the teachings of determining and providing an optimal resource assigned schedule, presented herein and below.

As used herein, the terms "tenant," "store," "restaurant," and/or "enterprise" can be used synonymously and interchangeably. These terms refer to the organization for which an optimal resource assigned schedule is determined and provided.

The term "resource" refers to human resources or labor and/or equipment or assets of an enterprise. For example, a resource can be employees, staffing, computing assets, terminal assets, etc.

System 100 includes a cloud 110 or a server 110 (hereinafter just "cloud 110), one or more enterprise servers 120, one or more user devices 130. Cloud 110 includes at least one processor 111 and a non-transitory computer readable storage medium (herein after just "medium) 112, which includes instructions for a resource calculator 113, a schedule constraint optimization model (hereinafter just "model") 114, and a model manager 115. The instructions when executed by the processor 111 cause the processor to perform operations discussed herein and below with respect to 113-115.

Each enterprise server 120 includes at least one processor 121 and medium 122, which includes instructions for a transaction system 126 and a scheduling system 127. The instructions when executed by processor 121 cause processor 121 to perform operations discussed herein and below with respect to 126-127. Additionally, medium 122 includes a variety of data stores and interfaces or application programming interfaces (APIs) to access the data stores. For example, medium 122 at least includes a transaction data store 123, a resource data store 124, and a sales forecast data store 125.

Each user-operated device 130 includes at least one processor 131 and medium 132, which includes instructions for a scheduling interface 133. The instructions when executed by the processor 131 cause the processor to perform operations discussed herein and below with respect to 133.

Initially, resource calculator 113 obtains sales forecast data from sales forecast data store 125 of a given enterprise/tenant from the corresponding enterprise server 120. Resource calculator 113 converts the sales forecast for a next or future period of time into resource requirements over the future period of time. For example, a given sales forecast indicates that X sales will take place over the next week at a given store/restaurant associated with the enterprise with the most sales occurring on a Saturday evening. Resource calculator translates the sales expected for each day of the upcoming week into staffing requirements at the restaurant; for example, on Saturday two cooks are needed, five servers, two hostesses, and one leader/manager. Resource calculator 113 determines the staffing requirements for each day of the upcoming week based on the projected daily sales provided in the sales forecast.

Resource calculator 113 provides the resources needed by day for each day of the forecasted period of time. In an embodiment, resource calculator 113 provides the resources needed per day in a table data structure to model manager 115.

Model manager 115 receives the resource requirements for the forecasted period at a given store/restaurant and obtains additional data from the transaction data store, resource data store 124, and known constraint and optimization data associated with the store/restaurant. The known constraint and optimization data can include a variety of data, such as resource roles, resource preferences, resource cost or rates by role, restaurant specific rules, resource performance metrics, resource availability, resource/labor laws or regulations, restaurant manager optimization preferences, etc. In an embodiment, the manager of the restaurant provides a portion of the constraint and optimization data via scheduling interface 133 of a manager operated device 130 to model manager 115. For example, resource preferences, resource performance metrics, and resource availability can change weekly or daily. Scheduling interface 133 permits the restaurant manager to keep a portion of the known constraint and optimization data up to date, such that whenever a resource/staff assignment schedule is requested, model manager 115 has the updated data.

Model manager 115 maps values associated with each resource and the constraint and optimization data to predefined values within a scale of integers and/or to Boolean values. For example, each employee or resource is represented by a unique integer number, as is roles of employees; resource availability is translated into a time series of Boolean values for "Y" available on a given day and given time of day or "N" unavailable on a given day and a given time of day. Resource preferences are mapped to a scale indicating days of week and times of day for which a given resource prefers or does not prefer to work. Model manager 115 can obtain the resource rates by role from the resource data store 124 or the rates by role can be supplied through the scheduling interface 133. Restaurant specific rules are customized by the restaurant manager via scheduling interface 133 or are maintained within the resource data store 124. Restaurant specific rules can be defined mathematically as conditions that the restaurant believes to be acceptable and unacceptable; for example, no employee resource can work more than 50 hours in a week, no cook can work more than 2 back to back shifts, a shift is defined as times of day associated with breakfast, lunch, and dinner for the restaurant.

Once the constraints and optimization data is translated into mathematical values, conditions, and statements, model manager 115 trains schedule optimization model 114 to maximizing and minimize the constraints and optimization data for purposes of outputting an optimized employee/resource schedule for a given future period of time. The resource requirements obtained from resource calculator 113 serves as a constraint that has to be satisfied in the schedule as do the resource laws or regulations. The resource requirements include resources needed by role for each shift in a given day of the given future period of time Enterprise/tenant specific rules, resource availability, resource performance, and resource preferences serve represent the optimization data that can either be maximized or minimized. That is, when the model 114 produces an optimized resource schedule certain constraints such as resource/labor laws and resource requirements cannot be violated while other constraints represent optimization data that is either to be maximized or minimized in the schedule generated by the model 114.

Once model 114 has reached acceptable accuracy metrics in producing optimized schedules, model manager 115 releases model 114 for production to provide real-time optimized schedules for a given enterprise/tenant. Individual managers of stores and restaurants can keep their changing constraint and optimization data for their resources/employees up to date with model manager 115 via scheduling interface 133. In an embodiment, the changing constraint and optimization data is maintained up to date within the corresponding resource data store 124 where it is obtained when needed by model manager 115.

Model 114 utilizes linear programming algorithmic approach to fit all the constraints that cannot be violated and to maximize or minimize other constraints that are optional. Optional constraints are objectives or optimization parameters. In an embodiment, the output of the model 114 is a table of numbers where the rows represent a specific employee/resource, and the columns represents shifts of a day for at least a week worth of days. Each cell of the table includes a number that maps to a given role of the enterprise/restaurant.

In an embodiment, model manager 115 translates the optimized schedule outputted by model 115 into specific employee names and specific roles of each employee for each shift of a given day over the week. In an embodiment, model manager 115 further translates the optimized schedule into a calendar format recognized by scheduling system 127 and uses an API to import the optimized schedule into a calendar data structure associated with employee assignments and schedules within the scheduling system 127.

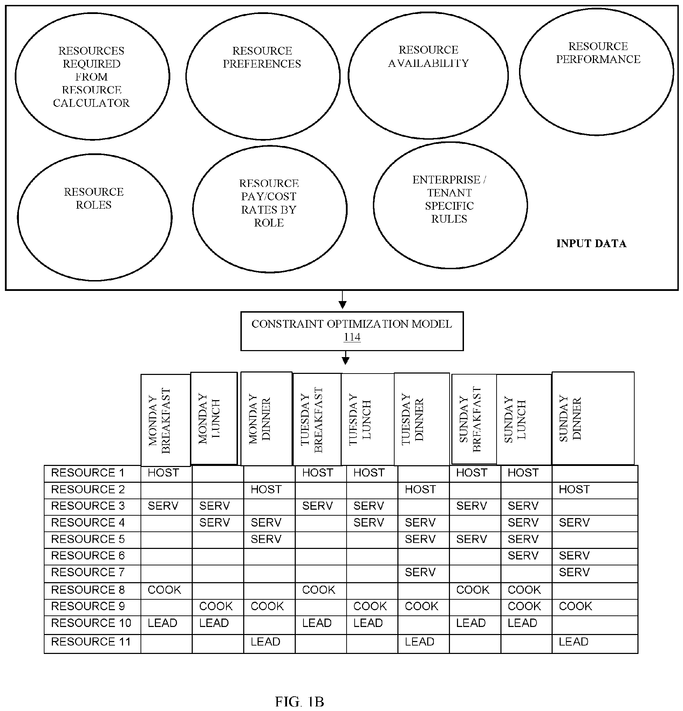

FIG. 1B is a diagram of example input data and optimized schedules produced by the system 100 of FIG. 1A based on the input data, according to an example embodiment. Model manager 115 obtains resources required by role from the resource calculator 113 for a week's worth of restaurant shifts associated with a next or future week for the restaurant. The resource calculator 113 bases the resources required based on forecasted sales for the next week provided from sales forecast data store 125.

As stated above, model manager 115 obtains a variety of constraints and optimization data for resource preferences, resource availability, resource performance, resource roles, resource pay/cost rates by role, and enterprise/tenant specific rules. Model manager translates and/or maps the constraints and optimization data into integer values, Boolean values, conditions, and statements. Each mathematically translated value, condition, and/or statement represent a constraint and whether the constraint is to be strictly adhered to, maximized, and/or minimized. The values, conditions, and statements are provided as input to the model 114 causing the model to output a weekly schedule for resources/employees as illustrated in the table of FIG. 1B.

The optimized schedule shown in FIG. 1B illustrates that the anticipated Sunday lunch shift is expected to be busy since 4 servers and 2 cooks are scheduled, which is more servers and cooks than any other day of the week. Conversely, Monday and Tuesday's breakfast shift is expected to be light since just 1 server is scheduled and 1 cook are scheduled.

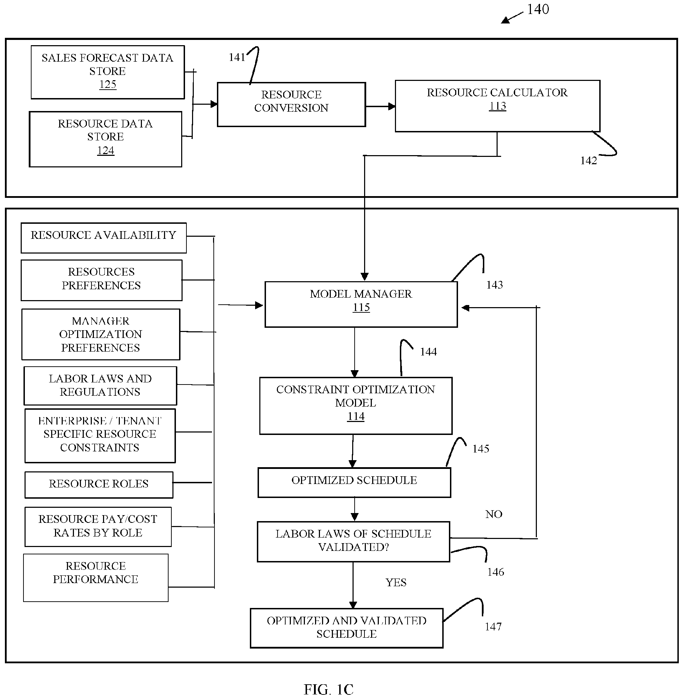

FIG. 1C is a diagram illustrating interaction 140 between components of the system 100 of FIG. 1A, according to an example embodiment. Notably, the components are shown in simplified form with just those components necessary for understanding the example interactions between components of system 100 illustrated.

Sales forecasts from the sales forecast data store and resource requirements from the resource data store are provided or obtained by a resource conversion application 141. Notably, the resource conversion application 141 is a subcomponent or a function of resource calculator 113. Resource conversion application 141 maps resource requirements of a given enterprise/tenant to predicted sales. For example, sales of X on a future date map to 2 servers, 2 cooks, and 1 leader for a given store. At 142, resource calculator 113 converts a given sales forecast over a given period of future time, using the resource requirements produced by the resource conversion application or function, into resources and roles needed during each shift of each day, which is identified in the given period of future time.

At 143, resource calculator 113 provides the requires requirements for the given period of future time to model manager 115. Model manager 115 obtains constraint and optimization data for the given enterprise/tenant from data stores 123 and 123, transaction system 126, and any current enterprise specific constraint and optimization data, which was provided via scheduling interface 133 as discussed above. Model manager 115 translates the data into mathematical values and statements for purposes of generating input features for optimization model 114. For example, model manager 115 translates the data into values and statements representing resource availability, resource preferences, manager optimization preferences, labor laws and regulations, enterprise/tenant specific resource constraints, resource roles, resource pay/cost rates by role, and resource performance.

At 143, model manager 115 provides the translated mathematical values, statements, resource requirements, the given future period of time (e.g., a week, a month, a quarter of the year, etc.), and the shifts per day defined for the enterprise/tenant as input features representing the constraints and optimization parameters to optimization model 114.

At 144, optimization model 114 processes the input features using the constraints and optimization parameters to output an optimized schedule for each shift of each day defined within the given period of future time. At 146, the optimized schedule is double checked for compliance with labor laws. In an embodiment, model manager 115 performs the compliance check. In an embodiment, a separate independent application checks for compliance.

Assuming the schedule complies, at 147, the model manager 115 provides the optimized and validated schedule through scheduling interface 133. In an embodiment, model manager 115 also converts the optimized schedule into a format recognized by scheduling system 127 and uses an API to upload the optimized schedule into the scheduling system 127 of the enterprise/tenant.

Assuming the schedule does not comply, model manager 115 modifies input features to make any violated assignment within the schedule a mandatory constraint. The model manager 115 provides the modified input features back to the optimization model 114 to receive an updated optimized schedule for which the violated assignment is corrected.

Model 114 utilizes constraints defined as mandatory and constraints defined as optional, which are referred to as objectives or optimization parameters herein and above. Model 114 employs optimization algorithms and linear programming for purposes of producing an optimal schedule data structure with resources and roles of the resources assigned to shifts within each day of a given future period of time (e.g., a week, a month, a quarter of a year, etc.). Model 114 produces an optimized schedule data structure in which the mandatory constraints are satisfied or not violated while the objectives are either maximized or minimized based on attributes assigned to each objective. The model manager 115 provides the constraints and objects with corresponding attributes as input features to the optimization model 114 by translating and mapping data obtained from the data stores 123 and 124 and obtained via interface 133 into mathematical values and statements or conditions. The input features also include the given period of future time, the shift intervals per day, and the resource requirements produced by the resource calculator 113. In an embodiment, model 114 is a trained optimization model to fit a solution based on constraints and objectives, each objective including an attribute to minimize or maximize.

System 100 permits optimized resource assignment schedules. This is particularly useful for stores of enterprises in producing employee work assignments and schedules. Notably, any resource assigned schedule benefits from system 100. Some other types of resources that are not human resources include, a power output assignment schedule for power generating units of a power plant, hardware and network usage or load assignments for subscribers to a cloud, etc.

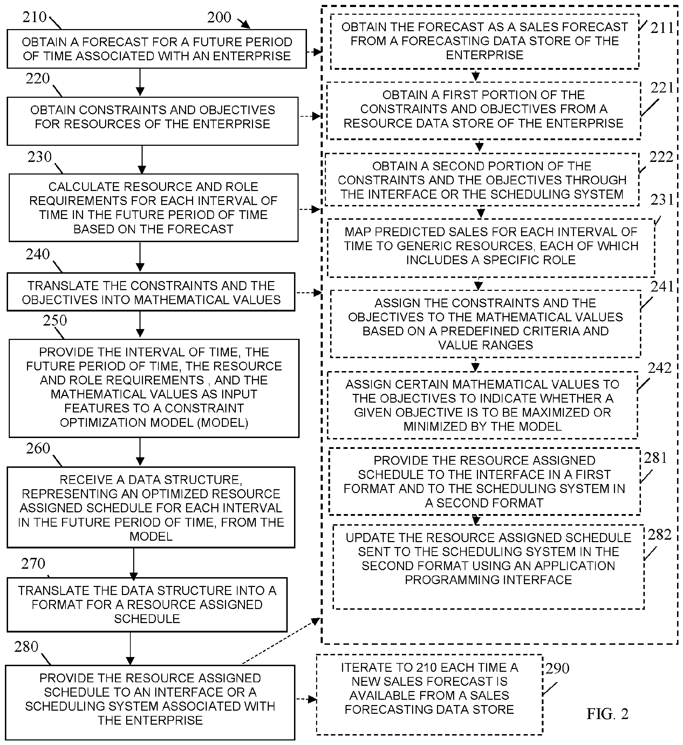

The above-referenced embodiments and other embodiments are now discussed within FIGS. 2-3. FIG. 2 is a flow diagram of a method 200 for determining and providing an optimal resource assigned schedule, according to an example embodiment. The software module(s) that implements the method 200 is referred to as a "optimal resource scheduler." The optimal resource scheduler is implemented as executable instructions programmed and residing within memory and/or a non-transitory computer-readable (processor-readable) storage medium and executed by one or more processors of one or more devices. The processor(s) of the device that executes the optimal resource scheduler are specifically configured and programmed to process the optimal resource scheduler. The optimal resource scheduler may have access to one or more network connections during its processing. The network connections can be wired, wireless, or a combination of wired and wireless.

In an embodiment, the device that executes the optimal resource scheduler is cloud 110 or server 110. In an embodiment, the optimal resource scheduler is all or some combination of 113, 114, and/or 115.

At 210, the optimal resource scheduler obtains a forecast for a future period of time associated with an enterprise. In an embodiment, at 211, the optimal resource scheduler obtains the forecast as a sales forecast from a forecasting data store 125 of an enterprise server 120 associated with an enterprise. In an embodiment, the sales forecast includes predicted sales for intraday intervals of time over the future period of time. In an embodiment, the future period of time is a week, biweekly, a month, two months, or three months.

At 220, the optimal resource scheduler obtains constraints and objectives for resources of the enterprise. In an embodiment of 211 and 220, at 221, the optimal resource scheduler obtains a first portion of the constraints and objectives from a resource data store 124; for example, resource of employee numbers/names, agreed resource/employee hours per week or month, resource/employee rates, resource/employee roles (e.g., cook, leader, server, host, etc.), labor laws and regulations, resource performance ratings, etc. In an embodiment of 221, at 222, the optimal resource scheduler obtains a second portion of the constraints and objectives through interface 133 from an enterprise user (e.g., a manager); for example, resource/employee preferences, resource/employee known availability over the future period of time, etc.

At 230, the optimal resource scheduler calculates resource and role requirements for each interval of time in the future period of time based on the forecast. In an embodiment, the optimal resource scheduler obtains the resource and role requirements from resource calculator 113.

In an embodiment, at 231, the optimal resource scheduler maps predicted sales for each interval of time to generic resources, each of the generic resources include a corresponding assigned specific role. For example, the optimal resource scheduler uses predicted sales for each interval and a predefined scale of needed resources by role for ranges of predicted sales to assign resources to each interval and assign roles for each of the resources. A generic resource is an employee unit by role; for example, 2 employee units for a cook indicates that for a given shift of an enterprise corresponding to the interval of time 2 cooks are predicted to be needed by the enterprise/restaurant.

At 240, the optimal resource scheduler translates the constraints and the objectives into mathematical values and/or mathematical statements. For example, optimal resource scheduler assigns some constraints a Boolean value indicating whether it is mandatory or not mandatory. As another example, optimal resource scheduler assigns integer values that map to specific conditions, such as does not like to work on Saturdays and prefers weekday mornings. In still another example, optimal resource scheduler arranges the mapped Boolean and/or integer values in conditions as mathematical statements.

In an embodiment of 231 and 240, at 241, the optimal resource scheduler assigns the constraints and objectives to the mathematical values based on a predefined criteria and value ranges. For example, optimal resource scheduler assigns a mathematical value representing a Monday morning breakfast shift as 21 where the first digit represents the day of the week (i.e., selected from digits 1-7) and the second digit of the two digit integer represents the shift of a day (i.e., selected from 1-3; 1 for breakfast, 2 for lunch, and 3 for dinner).

In an embodiment of 241 and at 242, the optimal resource scheduler assigns certain mathematical values for the objectives to indicate whether a given objective is to be maximized or minimized by model 114 when producing an optimized resource assigned schedule for the future period of time. For example, optimal resource scheduler assigns for 4 digit integer values for enterprise objectives with the last digit of the 4 digit integer value reserved to indicate via a 0 or 1 whether the corresponding objective associated with the first 3 digits is to be maximized or minimized.

At 250, the optimal resource scheduler provides the interval of time, the future period of time, the resource role and requirements, and the mathematical values as input features to model 114. At 260, the optimal resource scheduler receives a data structure, representing an optimized resource assigned schedule for the future period of time, from the model 114. In an embodiment, the data structure is a table with the rows representing a specific employee/resource number and the columns represents shifts of a business day as illustrated in the example provided in FIG. 1B above.

At 270, the optimal resource scheduler translates the data structure into a format for a resource assigned schedule. For example, optimal resource scheduler translates the employee numbers of the table into employee names, translates the column values for the columns of the table into shifts of a given day of the week, and translates numbers in the cells of the table into roles assigned to a given employee name on a given shift of a given day of the week.

At 280, the optimal resource scheduler provides the translated resource assigned schedule to an interface 133 or a scheduling system 127 associated with a corresponding enterprise server 120 of an enterprise. In an embodiment, at 281, the optimal resource scheduler provides the resource assigned schedule to the interface 133 in the format and provides the resource assigned schedule to the scheduling system 127 in a second format. In an embodiment of 281 and at 282, the optimal resource scheduler automatically updates the resource assigned schedule in the second format to the scheduling system 127 using an API.

In an embodiment, at 290, the optimal resource scheduler iterates to 210 each time a new sales forecast is available from the sales forecasting data store. In an embodiment, the optimal resource scheduler iterates to 210 based on a request received from an enterprise user through the interface 133.

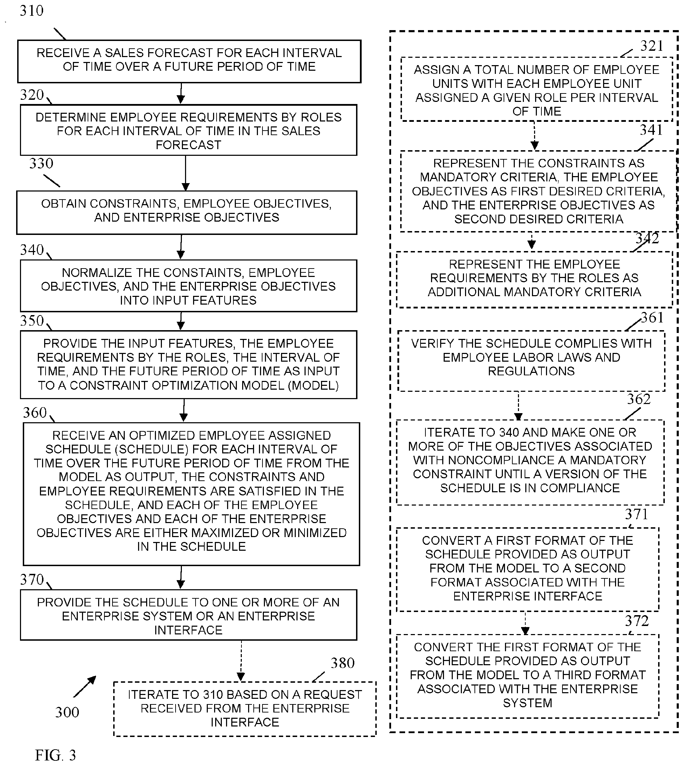

FIG. 3 is a flow diagram of another method 300 for determining and providing an optimal resource assigned schedule, according to an example embodiment. The software module(s) that implements the method 300 is referred to as a "resource assignment schedule predictor." The resource assignment schedule predictor is implemented as executable instructions programmed and residing within memory and/or a non-transitory computer-readable (processor-readable) storage medium and executed by one or more processors of a device. The processors that execute the resource assignment schedule predictor are specifically configured and programmed for processing the resource assignment schedule predictor. The resource assignment schedule predictor may have access to one or more network connections during its processing. The network connections can be wired, wireless, or a combination of wired and wireless.

In an embodiment, the device that executes the resource assignment schedule predictor is cloud 110 or server 110. In an embodiment, the resource assignment schedule predictor is some combination or all of 113, 114, 115, and/or method 200. The resource assignment schedule predictor presents another and, in some ways, an enhanced processing perspective from that which was shown above for system 100 and/or method 200.

At 310, the resource assignment schedule predictor receives a sales forecast for each interval of time over a future period of time. As an example, the sales forecast includes predicted sales for shifts of each day within a week.

At 320, the resource assignment schedule predictor determines employee requirements by roles for each interval of time in the sales forecast based on the predicted sales included in the sales forecast. In an embodiment, at 321, the resource assignment schedule predictor assigns a total number of units needed for each interval of time. Each unit includes an assigned role.

At 330, the resource assignment schedule predictor obtains constraints, employee objectives, and enterprise objectives. Employee objectives include role preferences, work schedule preferences, etc. Enterprise objectives include overall employee cost, employee overtime, preferred employees in certain roles, avoiding specific employees working on a same shift, etc.

At 340, the resource assignment schedule predictor normalizes the constraints, the employee objectives, and the enterprise objectives into input features. In an embodiment, at 341, the resource assignment schedule predictor represents the constraints as mandatory criteria, the employee objectives as first desired criteria, and the enterprise objectives as second desired criteria. In an embodiment, at 342, the resource assignment schedule predictor represents the employee requirements as additional mandatory criteria.

At 350, the resource assignment schedule predictor the input features, the employee requirements, the interval of time, and the future period of time as input to model 114. In an embodiment, at 360, the resource assignment schedule predictor receives an optimized employee assigned schedule for each interval of time over the future period of time from the model 114 as output. The constraints and employee requirements are satisfied in the schedule, and each of the employee objectives and each of the enterprise objectives are either maximized or minimized in the schedule.

In an embodiment, at 361, the resource assignment schedule predictor verifies the schedule complies with employee labor laws and regulations. In an embodiment of 361 and at 362, the resource assignment schedule predictor iterates to 340 and makes one or more of the objectives associated with noncompliance a mandatory constraint until a version of the schedule is determined to be in compliance with the labor laws and regulations.

At 370, the resource assignment schedule predictor provides the schedule to one or more of an enterprise system 127 and an enterprise interface 133. In an embodiment, at 371, the resource assignment schedule predictor converts a first format of the schedule provided as output from the model 114 into a second format associated with the enterprise interface 133. In an embodiment of 371 and at 372, the resource assignment schedule predictor converts the first format of the schedule provided as output from the model 114 into a third format associated with the enterprise system 127. In an embodiment, the resource assignment schedule predictor automatically updates the schedule to the enterprise system 127 in the third format using an API.

In an embodiment, at 380, the resource assignment schedule predictor iterates to 310 based on a request received from an enterprise user through enterprise interface 133. In an embodiment, when a new sales forecast is provided or detected within a sales forecast data store 125, the resource assignment schedule predictor iterates to 310 for an updated schedule.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method, comprising:
obtaining a forecast for a future period of time associated with an enterprise, the future period of time comprising one or more intervals of time;
obtaining constraints and objectives for resources of the enterprise;
calculating resource and role requirements for each interval of time in the future period of time based on the forecast;
translating the constraints and the objectives into mathematical values;
providing each interval of time, the future period of time, the resource and role requirements and the mathematical values as input features to a constraint optimization model (model);
receiving a data structure from the model, the data structure representing an optimized resource assigned schedule for each interval of time in the future period of time;
translating the data structure into a format for a resource assigned schedule; and
providing the resource assigned schedule to an interface or a scheduling system associated with the enterprise.

2. The method of claim 1, wherein obtaining the forecast further includes obtaining the forecast as a sales forecast from a forecasting data store of the enterprise.

3. The method of claim 1 or claim 2, wherein obtaining the constraints and the objectives further includes obtaining a first portion of the constraints and the objectives from a resource data store of the enterprise.

4. The method of claim 3, wherein obtaining the constraints and the objectives further includes obtaining a second portion of the constraints and the objectives through the interface or from the scheduling system.

5. The method of any preceding claim, wherein calculating further includes mapping each predicted sales for each interval of time to generic resources, each of which includes a specific role.

6. The method of any preceding claim, wherein translating further includes assigning the constraints and the objectives to the mathematical values based on predefined criteria and value ranges; and optionally
translating further includes assigning certain mathematical values for the objectives to indicate whether a given objective is to be maximized or minimized by the model.

7. The method of any preceding claim, wherein providing the resource assigned schedule further includes providing the resource assigned schedule to the interface in the format and to the scheduling system in a second format; and optionally
providing the resource assigned schedule further includes uploading the resource assigned schedule in the second format to the scheduling system using an application programming interface.

8. The method of any preceding claim further comprising, iterating the obtaining the forecast each time a new forecast is available from a forecasting data store.

9. A method, comprising:
receiving a sales forecast for each interval of time over a future period of time;
determining employee requirements by roles for each interval of time in the sales forecast based on the sales forecast;
obtaining constraints, employee objectives, and enterprise objectives;
normalizing the constraints, the employee objectives, and the enterprise objectives into input features;
providing the input features, the employee requirements by the roles, each interval of time, and the future period of time as input to a constraint optimization model (model);
receiving an optimized employee assigned schedule for each interval of time over the future period of time from the model, wherein the constraints and employee requirements are satisfied in the optimized employee assigned schedule, and each of the employee objectives and enterprise objectives are either maximized or minimized in the optimized employee assigned schedule; and
providing the optimized employee assigned schedule to one or more of an enterprise system or an enterprise interface.

10. The method of claim 9, wherein determining the employee requirements by the roles further includes assigning a total number of employee units with each employee unit assigned a given role per interval of time; and/or
normalizing further includes representing the constraints as mandatory criteria, the employee objectives as first desired criteria, and the enterprise objectives as second desired criteria.

11. The method of claim 9 or claim 10, wherein receiving further includes verifying the optimized employee assigned schedule complies with employee labor laws and regulations; and/or
verifying further includes iterating the normalizing and making one or more of the employee objectives or the enterprise objectives associated with noncompliance of the employee labor laws and regulations a mandatory constraint until a version of the optimized employee assigned schedule provided by the model is in compliance with the employee labor laws and regulations.

12. The method of any one of claims 9 to 11, wherein providing the schedule further includes converting a first format of the optimized employee assigned schedule provided as output from the model to a second format associated with the enterprise interface; and optionally
providing the schedule further includes converting the first format of the optimized employee assigned schedule provided as output from the model to a third format associated with the enterprise system.

13. The method of any one of claims 9 to 12 further comprising, iterating the receiving the sales forecast based on a request received from the enterprise interface.

14. A system, comprising:
at least one server comprising a processor and a non-transitory computer-readable storage medium;
the non-transitory computer-readable storage medium comprising executable instructions; and
the executable instructions when executed by the processor cause the processor to perform operations comprising:
calculating employee requirements by roles for each interval of time in a future period of time based on a sales forecast for the future period of time;
normalizing constraints and objectives into input features;
providing the employee requirements by the roles, each interval of time, the future period of time, the constraints, and the objectives as input to a constraint optimization model (model);
receiving an optimized employee assigned schedule for each interval of time over the future period of time as output from the model;
translating the optimized employee assigned schedule from a first format to at least one second format; and
providing the optimized employee assigned schedule in the at least one format to one or more of an enterprise interface and an enterprise scheduling system.

15. The system of claim 14, wherein the executable instructions associated with providing the optimized employee assigned schedule further includes providing the optimized employee assigned schedule in a first format to the enterprise interface and updating the optimized employee assigned schedule in a second format to the enterprise scheduling system using an application programming interface.
